# EUROPEAN PATENT APPLICATION

(11) **EP 4 825 181 A1**
(43) Date of publication of application: **21.10.2026**
(21) Application number: 25171022.4
(22) Date of filing: 16.04.2025
(51) Int. Cl.: A23D 7/01, A23J 7/00, A23L 15/00, A23L 29/00, A23L 29/10, A23L 33/12

(54) **PURIFIED EGG-YOLK LECITHIN AND A PROCESS OF PREPARATION THEREOF INCLUDING EXTRACTION**

(71) Applicant: Fresenius Kabi Deutschland GmbH, 61352 Bad Homburg (DE)
(72) Inventor: GUPTA, Nitin, 122 001 Gurgaon, Haryana (IN); HECKMANN, Dominik, 61352 Bad Homburg (DE); ABUL, Azim, 122 001 Gurgaon, Haryana (IN); SINGH, Govind, 122 001 Gurgaon, Haryana (IN); SINGH TOMAR, Vinod, 122 001 Gurgaon, Haryana (IN)
(74) Representative: Fresenius Kabi Deutschland GmbH

(57) **Abstract**

The present invention provides a purified egg-yolk lecithin and a process of its preparation by using specific solvents and conditions thereby improving the PC/PE ratio and allowing for a reduced environmental footprint. The present invention further, provides a lipid emulsion and a parenteral nutrition product comprising purified egg-yolk lecithin obtained by the process of present invention.

## Description

### FIELD OF THE INVENTION

The present invention relates to a purified egg-yolk lecithin and a process of preparation thereof. Further, the present invention relates to a lipid emulsion comprising the purified egg-yolk lecithin obtained by the process of the present invention and a nutritional composition containing such a lipid emulsion.

### BACKGROUND OF THE INVENTION

Egg-yolk lecithin is a natural phospholipid mixture derived from extraction and refinement of egg-yolk. It is commercially available and may be used in some dedicated pharmaceutical and parenteral nutrition products. It is used as an emulsifier in the food and pharmaceutical industries.

During the extraction of phospholipids from egg-yolk, impurities such as cholesterol and neutral lipids are also co-extracted. Various methods exist to purify egg-yolk lecithin, including solvent extraction, chromatography, and low-temperature solvent precipitation. The choice of purification method depends on the intended use of the isolated lecithin. In some applications, such as clinical nutrition, it is beneficial to have an egg-yolk lecithin that is enriched in phosphatidylcholine. An egg-yolk lecithin, enriched in phosphatidylcholine, serves as an additive in pharmaceuticals, particularly as an emulsifier in fat emulsions. It requires a certain ratio to of phosphatidylcholine to phosphatidylethanolamine to result in stable emulsions.

Many described methods for the isolation of egg-yolk lecithin from egg-yolk are based on the use of large amounts of solvents, such as hexanes or acetone. Because egg-yolk lecithin is only poorly soluble in acetone, it precipitates, whereas impurities such as a neutral lipids dissolve in acetone and are separated.

EP2502928B1 discloses a method for producing a purified egg-yolk phospholipid by treatment with water and alcohol containing acetone. The acetone content is 80% and the alcohol content is 0.3 - 3 vol%. However, the yield of phosphatidylcholine enriched phospholipid is not high enough for the industrial application in this rather inefficient process.

Current extraction methods which involve the use of acetone often result in egg-yolk lecithin that contains significant amounts of residual impurities.

Luz Palacios and Tong Wang (Journal of American Oil Chemists Society (2005) 82,565-569) disclosed an extraction of de-oiled and undeoiled egg-yolk lecithin with ethanol. The purity of the phosphatidylcholine enriched egg-yolk lecithin achieved is quite low though (35.7-53.3%). The method also uses several organic solvents, including a chlorinated solvent, such as chloroform, making it a non-environmentally friendly process.

Another process involves the use of aluminium oxide for removing impurities from an extracted egg-yolk lecithin.

To obtain a purified egg-yolk lecithin satisfying the requirements of a component for producing an emulsion of pharmaceutical grade, which is a purity grade, also required for parenteral nutrition products, it may be required to repeat solvent extraction treatment steps several times, thereby increasing the volume of organic solvents used, increasing cost and also reducing the purified egg-yolk lecithin yield. Further the use of organic solvents in these traditional extraction processes can have negative environmental impacts if not properly managed, leading to environmental and safety concerns.

Especially, when purified egg-yolk lecithin is used as an emulsifier for parenteral nutritional emulsions, it is beneficial that it is free from remaining aluminium ions, as well as that it provides a sufficient phosphatidylcholine concentration.

There is a need in the art to develop a process for the isolation of egg-yolk lecithin in a purity that is sufficient for the preparation of pharmaceutical grade emulsions as required for parenteral nutritional emulsions, which provides for a sufficient amount of phosphatidylcholine in the obtained product and is allowing for a reduction of waste comprised of environmentally harmful solvents.

### OBJECT OF THE INVENTION

The primary objective of the present invention is to address and overcome one or more disadvantages in the prior art processes for isolating a purified egg-yolk lecithin.

Another objective of the present invention is to provide a process for the preparation of purified egg-yolk lecithin that yields a sufficient amount of purified egg-yolk lecithin to be applicable in the industrial production.

Yet another objective of the present invention is to provide a process for the preparation of purified egg-yolk lecithin using environment friendly solvents and conditions, which allow the easy retrieval of hazardous solvents, the ability to recycle them, and thereby reducing the environmental footprint and ensuring the safety of the production process of the purified egg-yolk lecithin.

Yet another objective of the present invention is to provide a purified egg-yolk lecithin, with a high amount of phosphatidylcholine.

A further objective of the present invention is to provide a lipid emulsion comprising the purified egg-yolk lecithin obtained by the process.

A further objective of the present invention is to provide a process to prepare an emulsion suitable for parenteral nutrition which uses the egg-yolk lecithin obtained by the process as emulsifier to obtain stable nutritional emulsions.

### SUMMARY OF THE INVENTION

The inventors of this process for preparing purified egg-yolk lecithin from SFE-EYP as starting material have found that if the extraction of the egg-yolk lecithin is performed with a specific solvent mixture of ethanol and acetonitrile, the resulting final egg-yolk lecithin can be obtained in sufficient amounts (high yield) and contains high levels of phosphatidylcholine. The inventors provide a process for preparation of a purified egg-yolk-lecithin with a phosphatidylcholine content above 75% w/w.

**In a first aspect,** the present invention provides a process for the preparation of a purified egg-yolk lecithin comprising the steps of:
**a.** providing supercritical fluid extracted egg-yolk powder as starting material,
**b.** treating the supercritical fluid extracted egg-yolk powder with a solvent 1,
c. separating the product obtained in step b) from the solvent 1 used in step b),
**d.** extracting an egg-yolk lecithin fraction from the product obtained in step c) with a solvent 2,
e. optionally, treating the egg-yolk lecithin fraction obtained in step d) with charcoal,
**f.** precipitating impurities from the egg-yolk lecithin fraction obtained in step d) or step e), by cooling the solution obtained in step d) or step e);
**g.** removing the precipitated impurities from the product obtained in step f),
**h.** isolating the purified egg-yolk lecithin from the product obtained in step g), and
**i.** optionally, drying the purified egg-yolk lecithin;
wherein, in step d) the solvent 2 is a solvent mixture consisting of ethanol and acetonitrile.

**In a second aspect,** the present invention provides the purified egg-yolk lecithin obtained by the process as described above.

**In a third aspect,** the present invention provides for a lipid emulsion comprising purified egg-yolk lecithin obtained by the process according to the invention.

**In a fourth aspect,** the present invention provides a nutritional product suitable for parental administration comprising a lipid emulsion comprising a purified egg-yolk lecithin obtained by the process of the present invention.

**In a fifth aspect,** the present invention provides a method for preparing a lipid emulsion, comprising the steps of:
**a.** providing an oil phase, comprising an oil and optionally a pharmaceutically acceptable antioxidant, optionally a pharmaceutically acceptable co-emulsifier, preferably a free long chain fatty acid, wherein the fatty acids are present in triglyceride-bound form;
**b.** providing an aqueous phase comprising water for injection and optionally a pharmaceutically acceptable tonicity agent and/or an agent for pH adjustment and/or a chelating agent;
**c.** forming a pre-emulsion by mixing the oil phase provided in step a) with the aqueous phase provided in step b);
**d.** forming an oil-in-water emulsion by high-pressure homogenizing the pre-emulsion obtained in step c); and
**e.** sterilizing the oil-in-water emulsion obtained in step d), wherein optionally the oil-in-water emulsion is filled into a suitable container before or after sterilization;
   wherein the purified egg-yolk lecithin according to present invention is added in step a) or step b).

### BRIEF DESCRIPTION OF THE DRAWING

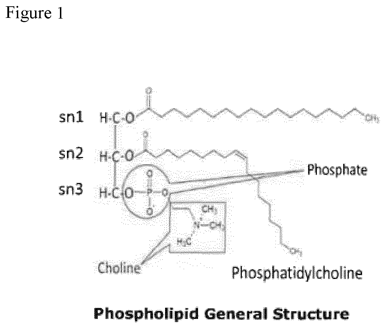

**Fig 1** shows the general structure of phospholipid.

### DETAILED DESCRIPTION OF THE INVENTION

Various methods for purification of egg-yolk lecithin are already known in the art, which demonstrate the difficulties to control cholesterol via crystallization/precipitation processes. The inventors identified a process to gain purified egg-yolk lecithin with a high amount of phosphatidylcholine (PC) when starting from SFE-EYP. The critical step for enriching PC content was considered the extraction step, followed by precipitation of PE. By identifying the most suitable solvent mixture, depletion of phosphatidylethanolamine (PE) was achieved by freezing the crude phospholipid (PL) solution and separating the precipitated PL by filtration (predominantly PE). On concentrating the filtrate, phospholipids enriched in PC are obtained.

The present invention provides a process for the preparation of a purified egg-yolk lecithin and the obtained purified egg-yolk lecithin, which may be used for preparing a parenteral nutritional composition.

The obtained egg-yolk lecithin is characterized by a high purity and an increased phosphatidylcholine content. This process has several advantages such as the use of environmentally friendly solvents and the possibility to easily recover, recycle and reuse the solvents, thereby reducing the amount of hazardous waste. Therefore, the present invention is focused on the use of an environmentally friendly solvent mixture of ethanol and acetonitrile, preferably in a vol/vol ratio of 57:43, in a defined process for the preparation of purified egg-yolk lecithin.

### DEFINITIONS

The following definitions are used in connection with the present application unless the context indicates otherwise.

As used herein, the terms "comprises", "comprising", "includes", "including", "containing", "having" or any other variation thereof, are intended to cover a nonexclusive inclusion.

Dimethyl carbonate, also referred to as DMC, is a carbonate ester that is carbonic acid in which both hydrogens are replaced by methyl groups.

As used herein, the term **"treating"** refers to the process of contacting a substance, such as, for example, supercritical fluid extracted egg-yolk powder, with one or more solvents or other agents. This treatment may involve various methods, including but not limited to, mixing, stirring, agitating, immersing, or exposing to allow for physical interaction between the substance and the solvents or agents. The result of treating can include purifying, extracting, reacting, or otherwise modifying the substance to achieve the desired outcome.

As used herein, the term **"separating"** refers to a process for isolating an insoluble material from a solvent or solution. This process can be accomplished through various techniques, including but not limited to filtration, decantation, extraction, distillation, evaporation, centrifugation, drying, or a combination thereof.

The term **"purified egg-yolk lecithin"** as used herein refers to egg-yolk lecithin that is free from certain impurities and significantly reduced in others. The purified egg-yolk lecithin is further characterized by being enriched in phosphatidylcholine. It presents a purity profile and stability that makes it suitable for further applications in nutritional and pharmaceutical products.

The term **"phosphatidylcholine"** refers to a class of phospholipids that incorporate choline as a headgroup. Hence it refers to variety of compounds, rather than a unique compound, due to several different fatty acid chain types possible, as exemplified in Figure 1.

The term **"supercritical fluid extracted egg-yolk powder"** or "SFE-EYP" refers to egg-yolk powder where neutral lipids (such as cholesterols) have been extracted using a technique called "supercritical fluid extraction". This technique most commonly uses non-hazardous carbon dioxide as fluid, at conditions above its critical point, where it behaves like both a gas and a liquid, allowing selective extraction based on solubility. Under high pressure and temperature, the extraction results in a powder with potentially reduced fat content while preserving valuable components like phospholipids, depending on the extraction conditions used. Supercritical fluid can selectively extract certain lipids like phospholipids (mainly triglycerides and cholesterol) from the egg-yolk under mild conditions. The supercritical fluid extracted egg-yolk powder is used as starting material in the process according to the invention. It may also be referred to as defatted or de-oiled egg-yolk powder. A detailed description of the process is disclosed in Hietaniemi (2009) Eur Food Res Technol 228: pages 857-863.

Accordingly, throughout the application the term supercritical fluid extracted egg-yolk powder (SFE-EYP) which is used herein as starting material for the isolation of egg-yolk lecithin refers to a composition that is obtained by applying supercritical fluid extraction with CO2 to egg-yolk. Preferably, it is a composition comprising phosphatidylcholine (PC), phosphatidylethanolamine (PE), cholesterol, sphingomyelin (SHP), phosphatidylinositol (PI), lyso-phosphatidylethanolamine (LPE) and lysophosphatidylcholine (LPC), and various impurities, more preferably it has a reduced content of neutral lipids, more preferably of triglycerides, and cholesterol, as compared to dried egg-yolk powder.

The exact composition of the SFE-EYP depends on the type of egg-yolk used as well as on the conditions used in this extraction process.

Preferably, the SFE-EYP used as starting material for the process of present invention comprises cholesterol below 2% w/w, residual triglyceride in the range 1-2% w/w and more than 70% w/w phosphatidylcholine.

The terms **"extracting"** or **"extraction"** as used herein refer to a process involving the use of solvents to isolate a specific substance from a mixture of components. This process typically involves dissolving the desired substance in a solvent or solvent mixture, allowing it to separate from the other components in the mixture that are insoluble in such solvent or solvent mixture. The solvent can then be removed to obtain the purified substance. In the process according to the invention the term extracting as used in step d refers to this understanding.

The term **"precipitating"** or **"precipitation"** as used herein refers to a process wherein a substance is solidified. It may crystallize or otherwise change its status from liquid to solid. Precipitation can be induced by changes in temperature, pH, concentration, or the addition of another reagent or solvent.

As used herein, the term **"drying"** refers to the process of removing residual amounts of liquid, such as a solvent, from a substance, typically by using heat, airflow, vacuum, or a combination of these methods.

**High-performance liquid chromatography** (HPLC) is a technique used to separate molecules based on size and surface charge, among other properties. The incorporation of ultra-violet (UV) spectroscopy with HPLC allows to determine the concentration of molecules identified and separated or simply to compare the relative concentration of same eluents in different runs.

The incorporation of a charged aerosol detector (CAD) with HPLC allows to determine the mass of chemical compounds present in a sample by creating charged aerosol particles which are detected using an electrometer. The employed process generates a signal directly proportional to the mass of the analyte present. It is commonly used for the analysis of compounds that cannot be detected using traditional UV/Vis approaches due to their lack of a chromophore.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the present invention, suitable methods and materials are described below. In case of conflict, the present specification, including definitions, will control. In addition, the materials, methods, and examples are illustrative only and not intended to be limiting.

When an amount, concentration, or other value or parameter is given as either a range, preferred range, or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

Egg-yolk is composed of various nutrients, including proteins, fats, and phospholipids. According to Aro et al. (Eur Food Res Technol (2009) 228:857-863) approximately 50% of yolk is water and after spray drying, the resulting powder contains about 60% of lipids, which consist of neutral lipids (65%), phospholipids (31%) and cholesterol (4%). Whereas dried egg-yolk powder has also been described to contain approximately 15% phospholipids, which are mainly composed of roughly 70% phosphatidylcholine and 20% phosphatidylethanolamine (Burley R.W., Vadehra D.V., The Avian Egg Chemistry and Biology, John Wiley & Sons (1989)). It seems undisputed though, that the primary phospholipids in egg-yolk are phosphatidylcholine (PC), constituting about 70% and phosphatidylethanolamine (PE) constituting around 15% of the total phospholipids in egg-yolk. Egg-yolk proteins include lipoproteins and phosphoproteins, which together can make up about 16% of the yolk's weight. However, as reported in the literature, there is considerable variation in the composition of egg yolks, possibly because of differences in the breeds and feed of the hens.

While developing a suitable process for purification of egg-yolk lecithin, that is enriched in PC, various factors needed to be considered. One of which was the solubility profile of egg-yolk lecithin in the solvent. Based on a solubility study performed with a large number of solvents comprising C₁-C₄ alcohols, toluene, DMC, DEC, THF, ethers and ketones, n-hexane, mixtures of a short aliphatic alcohols with either nitriles, or with dimethyl carbonate (DMC), or with diethyl carbonate (DEC), the following were considered the most suitable candidates for extraction of egg-yolk lecithin from the washed SFE-EYP: ethanol, methanol, isopropanol, toluene, 1-butanol, mixtures of diethyl carbonate:ethanol (3:2, 2:3 and 1:1), dimethyl carbonate:ethanol (3:2, 2:3 and 1:1) and an ethanol:acetonitrile (57:43) mixture. If ratios of solvents are given for solvent mixtures these are based on vol:vol. Potentially all of the solvents and solvent mixtures from that list can be used for the extraction of egg-yolk lecithin from SFE-EYP.

Surprisingly when testing these different solvents, the inventors of the present application found that extracting the supercritical fluid extracted egg-yolk powder with a mixture of ethanol:acetonitrile in step d) of the process according to the invention, not only sufficiently extracted the egg-yolk lecithin from the washed SFE-EYP, but it also turned out to be the most suitable solvent for the following step f).

For the freezing-out of impurities (step f), each solvent and solvent mixture has a certain optimal temperature range, which is also dependent on the concentration of the solution, which itself is dependent on the efficacy of the extraction (step d).

When following the extraction step d) wherein the solvent mixture ethanol:acetonitrile was used, with a step f) to precipitate the impurities by cooling, significant amounts of components like phosphatidylethanolamine could be removed, the phosphatidylcholine content of the so purified egg-yolk lecithin was increased more efficiently than when alternative extraction solvents were used.

Accordingly, the process according to the invention involves an extraction step wherein the extracting solvent is a mixture of ethanol and acetonitrile. In a preferred embodiment the mixture is defined by a volume ratio of 57% ethanol and 43% acetonitrile.

An additional benefit is gained for the environment because the 57:43 ratio of ethanol and acetonitrile represents an azeotrope with a boiling point of 72.9°C (compared to 78.4°C for ethanol and 82.0°C for acetonitrile). The azeotrope can be easily recovered from the reaction mixture by distillation, maintaining the desired ratio between the two solvents.

**In a first aspect,** the present invention relates to a process for the preparation of a purified egg-yolk lecithin comprising the steps of:
a. providing supercritical fluid extracted egg-yolk powder as starting material,
b. treating the supercritical fluid extracted egg-yolk powder with a solvent 1,
c. separating the product obtained in step b) from the solvent 1,
d. extracting an egg-yolk lecithin fraction from the product obtained in step c) with solvent 2,
e. optionally, treating the egg-yolk lecithin fraction obtained in step d) with charcoal,
f. precipitating impurities from the egg-yolk lecithin fraction obtained in step d) or step e), by cooling the solution obtained in step d) or step e),
g. removing the precipitated impurities from the product obtained in step f),
h. isolating the purified egg-yolk lecithin from the product obtained in step g), and
i. optionally, drying the purified egg-yolk lecithin,
wherein, in step d) the solvent 2 is a mixture of ethanol and acetonitrile.

Accordingly, the present invention provides a multi-step process for the preparation of a purified egg-yolk lecithin using SFE-EYP as starting material, and a mixture of ethanol and acetonitrile as a solvent in step d), wherein in a first step the SFE-EYP is provided and in a second step the SFE-EYP is treated with a solvent 1, such as, for example, dimethyl carbonate (DMC). Treating may involve one or more of mixing, stirring, agitating, immersing, or exposing SFE-EYP powder with solvent 1. Preferably, the treating comprises adding SFE-EYP to a solvent 1 and stirring the obtained mixture at an elevated temperature. Preferably, the temperature is in a range from 30 to 60°C, preferably from 35 to 55°C, most preferably from 40 to 45°C. It is further preferred that the stirring is maintained for a time interval of 50 minutes to 70 minutes, preferably for 50 minutes to 65 minutes, most preferably for 55 to 65 minutes. In a preferred embodiment, such treating of SFE-EYP powder with solvent 1 results in obtaining a slurry. The process may be made even more efficient if a radical scavenger is added whenever oxidation protection is needed. Preferably, step b), step d) step e) and/or step g) further comprise an addition of a radical scavenger. It is preferred that said radical scavenger is DL-α-Tocopherol. It may be added during step b), during step d), during and after the charcoal treatment in step e), and/or during step g).

The amount of solvent 1 provided to add the SFE-EYP to in step b) may be 2 to 10 mL per g of SFE-EYP, preferably 3 to 8 mL, more preferably 4 to 8 mL per g of SFE-EYP.

Step b) may further comprise the addition of a radical scavenger. Preferably, the radical scavenger is DL-α-Tocopherol.

In step c), the product obtained in step b) is separated from the solvent 1.

In a preferred embodiment, the desired product obtained in step b) is solid.

The solid product can be separated using a conventional method such as filtration, decantation, centrifugation, or a combination thereof.

In some embodiments, the separation of the product is done by filtration to remove soluble impurities that are solubilized by the solvent.

The resulting product may be washed with solvent 1.

To remove remaining solvent 1 the product of step c), with or without washing, before adding the extracting solvent mixture of ethanol and acetonitrile in step d) may be further dried. The drying may be carried out under vacuum at 200 to 300 mbar pressure at a temperature in a range from 15 to 35°C preferably, from 20 to 30°C for 4-6 hours.

In step d), an extraction of an egg-yolk lecithin fraction from the product obtained in step c) is performed using a solvent mixture of ethanol and acetonitrile. Preferably, the solvent mixture of ethanol and acetonitrile is provided in a vol/vol ratio of 57 to 43.

In a preferred embodiment, step d) may further comprise the addition of a radical scavenger. The radical scavenger is preferably DL-α-Tocopherol.

In another preferred embodiment, a radical scavenger may be dissolved in the solvent of step d) as described above before the extraction process.

The most suitable extraction temperature was determined when different temperature ranges were tested, as described in Example 3.

Preferably, the extraction in step d) is performed at a temperature in a range of 50 to 60°C. The solution is stirred for 30 to 60 min, preferably for 30 to 40 minutes. It turned out that the selected solvent allowed for a rather short extraction time, which allowed a higher overall yield, as the phospholipids generally are heat sensitive components.

The mixture may be filtered to remove insoluble particles. The insoluble material may be optionally rinsed with the solvent mixture. The rinsed solution is then added to the filtrate.

Step e) is optional. It involves treating the egg-yolk lecithin fraction obtained in step d) with charcoal, wherein treating comprises stirring the liquid solvent containing the extracted egg-yolk lecithin fraction with added charcoal. The amount of added charcoal in the process may vary from 1% w/w to 5% w/w, preferably 2% to 4% w/w. It is a preferred embodiment wherein the charcoal treatment is performed at a temperature in a range from 30 to 50°C for a time interval of 30 minutes to 3 hours, more preferably at a temperature of 40 to 45°C for a time interval of 1 hour to 2 hours.

Different types of charcoal, strongly acidic or basic, may be used during step e) of the process.

Step e) may comprise the addition of a radical scavenger after separation of the charcoal from the solution. Preferably the radical scavenger is DL-α-Tocopherol.

The essential step of the process for separating phospholipids and thereby enriching the phosphatidylcholine content is step f). Therein the unwanted components are separated by cooling, also referred to as freezing out. It is a simple and efficient method to refine phospholipids under mild conditions, as it does not involve changes of solvents, precipitation in acetone and avoids the use aluminium oxide absorbers, which is an alternative method that however results in an increased level of aluminium ions.

Different ratios of ethanol to acetonitrile were successfully tested, however, the 57:43 ratio, representing the azeotropic ratio is the preferred one. It also guarantees recyclability of the solvent.

For the freezing-out of impurities (step f), each solvent and solvent mixture has a certain optimal temperature range, which is also dependent on the concentration of the solution, which itself is dependent on the efficacy of the extraction (step d). When different temperature ranges for step f) were assessed when the mixture of ethanol:acetonitrile (57:43) was used in step d), it turned out that a temperature in the range of -8°C to -12°C was more beneficial for the resulting preferred PC/PE ratio than when a temperature in the range of -4°C to -6°C, or -14°C to -16°C was tested.

The process accordingly further comprises step f) which is a step of precipitating impurities, such as PE, from the egg-yolk lecithin fraction obtained in the previous step. This is achieved by cooling the egg-yolk lecithin fraction obtained in step d) or step e). It is preferred that the cooling is done at a temperature in a range of -12°C to -8°C, more preferably in a range from -11°C to -10°C. The cooling is followed by stirring for 60 to 90 min, preferably for 90 min, at the reduced temperature to precipitate further impurities.

Selecting the combination of ethanol and acetonitrile as solvent in step d) brings the additional benefit that said mixture can be directly taken to the next step of precipitating the impurities by cooling in step f), because at lower temperature acetonitrile acts as antisolvent towards phospholipids, in particular PE, resulting in a selective precipitation of PE while keeping the majority of PC in solution. In this way an additional concentration step of extracted mass, can be avoided thereby simplifying the downstream process and resulting in an excellent yield.

A comparative experiment designed to determine the most suitable solvent for the winterization effect, i.e. the precipitation at lower temperatures achieved by cooling, was performed and showed that the best suited solvent mixture was the one of ethanol and acetonitrile. The combination of ethanol and DMC tends to freeze, at reduced temperatures before sufficient PE precipitation takes place, whereas combinations of ethanol and DEC result in a higher content of PE (the less desired phospholipid). In addition, it is more difficult, and more energy consumptive to remove these solvents from the purified phospholipid extract, i.e. the purified egg-yolk lecithin, after the winterization step took place (cooling step), compared to the removal of ethanol and acetonitrile, especially at the ratio of 57:43.

Step g) comprises the separation of the precipitated impurities from the egg-yolk lecithin containing solution. If the optional step e) is performed prior to the step f), then the removal of the charcoal adsorbed with further impurities may be performed simultaneously. The precipitated impurities may be separated by removing them from the egg-yolk lecithin fraction obtained in step d) or step e) by conventional methods such as filtration, centrifugation etc., preferably the precipitated impurities are removed by filtration.

Step g) may involve the addition of a radical scavenger after removal of precipitated impurities from the solution. Preferably, the radical scavenger is DL-α-Tocopherol.

After the removal of the precipitate (cooling and filtration), the product obtained in step g) is a solution.

In step h) of the process the dissolved purified egg-yolk lecithin is isolated from the product obtained in step g). This step may be performed by conventional methods such as concentration, distillation, evaporation etc., preferably purified egg-yolk lecithin is isolated by evaporation. In this step a viscous product is obtained.

The isolated purified egg-yolk lecithin may optionally be dried. With an optional step i) of drying, e.g. by using a belt freeze dryer, the product may be converted into a fluffy solid. Preferably the drying takes place at a temperature in a range of 25°C to 35°C for 1 to 4 hours.

This process results in a good yield of a purified egg-yolk lecithin, particularly it results in a better yield than when different extraction solvents are used in step d) while achieving a PC/PE ratio of above 6, preferably above 7, more preferably above 8.

In some preferred embodiments, the process according to the present invention comprises no additional step of treating any of the solutions with aluminium oxide.

**In a second aspect,** the present invention provides a purified egg-yolk lecithin obtained by the process described above. This purified egg-yolk lecithin has a phosphatidylcholine content of 75-80%.

The purified egg-yolk lecithin obtained by the process according to the invention has a better lipid profile as it shows an enrichment in phosphatidylcholine (PC) and a reduced amount of phophatidylethanolamine (PE), cholesterol, sphingomyelin (SHP), phosphatidylinositol (PI), lysophosphatidylethanolamine (LPE), lysophosphatidylcholine (LPC), as compared to the commercially available product tested (see Table 1).

In yet another preferred embodiment, the purified egg-yolk lecithin obtained by the process, has an improved purity profile as compared to the product obtained by using different processes. Particularly it is free from remaining aluminium traces, that would otherwise remain in the product, when aluminium oxide is used to remove the impurities.

It is therefore one preferred embodiment of present invention wherein the purified egg-yolk lecithin is essentially free from aluminium ions. Essentially free from aluminium ions in this context refers to less than 0.5 ppm, detected by ICP-OES. ICP-OES refers to inductively coupled plasma optical emission spectroscopy, also referred to as inductively coupled plasma atomic emission spectroscopy (ICP-AES), which is an analytical technique used for the detection of chemical elements. Preferably the purified egg-yolk lecithin contains less than 0.1 ppm, most preferably less than 0.025 ppm of aluminium ions.

The improved purity profile can be described as comprising reduced amounts of phosphatidylethanolamine, and an increased amount of phosphatidylcholine compared to product obtained by the use of different solvents. Preferably the purified egg-yolk lecithin obtained by the process has a ratio of PC/PE of 7.5 to 9.0, more preferably of 8.0 to 9.0, most preferably of 8.5 to 8.7.

**Table 3** of Example 2 presents data disclosing the composition of egg-yolk lecithin samples, more particularly the PC and PE content thereof, and the yield resulting from a process according to step d) of the invention, that is extracting an egg-yolk protein sample (SFE-EYP), with a list of selected extraction solvents (solvent 2) for use in step d) of the process.

Ethanol and Methanol as solvent 2 in step d) tend to extract some other constituents of the egg-yolk powder as indicated by the higher extraction yield and lower PC content. In case of extraction with isopropanol (IPA), much higher volumes of the solvent were required to result in a sufficiently enriched PC content, and the PE content was always higher, therefore it was excluded as suitable solvent for the extraction step in the process according to the invention. The ethanol:acetonitrile mixture (57:43) was selected as solvent for extraction based on a favourable PC/PE profile.

**Table 1 presents the determined amounts of the different components of samples of purified egg-yolk lecithin according to the invention analysed with an HPLC-CAD. Batch 1 represents a commercially available egg-yolk lecithin; Batch 2 and Batch 3 represent purified egg-yolk lecithin samples resulting from SFE-EYP that was purified using a first solvent 1 in step b) and ethanol:acetonitrile (57:43) in step d) of the process.**

| **Batch** | **PC** (%w/w) | **PE** (%w/w) | **ratio** | **Cholest erol (%w/w)** | **SPH (%w/w)** | **LPE (%w/w)** | **LPC (%w/w)** | **Yield (w/w)** |
|---|---|---|---|---|---|---|---|---|
| (1) | 76.62 | 7.38 | 10.38 | 0.43 | 2.00 | 0.22 | 1.53 | - |
| (2) | **77.09** | **6.17** | **12.49** | **0.32** | **1.51** | **0.09** | **1.51** | **0.26** |
| (3) | **79.38** | **5.60** | **14.18** | **0.39** | **1.38** | **0.09** | **1.48** | **0.27** |

**In a third aspect,** the present invention provides a lipid emulsion comprising the purified egg-yolk lecithin obtained by the process according to the invention. Lipid emulsions may contain egg-yolk lecithin as emulsifying agent. Such a lipid emulsion may be used to provide parenteral nutrition products that comprise components essentially insoluble in water.

**In a fourth aspect,** the present invention provides a nutritional product suitable for parenteral administration comprising a lipid emulsion comprising a purified egg-yolk lecithin obtained by the process of the present invention.

**In a fifth aspect,** the present invention provides a method for preparing a lipid emulsion, comprising the steps of:
a) providing an oil phase comprising an oil, and optionally a pharmaceutically acceptable antioxidant, and optionally a pharmaceutically acceptable co-emulsifier; preferably a free long chain fatty acid, wherein the fatty acids are present in triglyceride-bound form;
b) providing an aqueous phase comprising water for injection and optionally a pharmaceutically acceptable tonicity agent and/or an agent for pH adjustment and/or a chelating agent;
c) forming a pre-emulsion by mixing the oil phase provided in step a) with the aqueous phase provided in step b);
d) forming an oil-in-water emulsion by high-pressure homogenizing the pre-emulsion obtained in step c); and
e) sterilizing the oil-in-water emulsion obtained in step d), wherein optionally the oil-in-water emulsion is filled into a suitable container before or after sterilization,
wherein the purified egg-yolk lecithin is added in step a) or step b).

In a preferred embodiment it is the purified egg-yolk lecithin that is obtained by the process for preparing a purified egg-yolk lecithin starting from SFE-EYP according to the invention.

In another preferred embodiment, the antioxidant is DL-α-tocopherol.

The components of an aqueous phase may be dispersed in water to obtain a suspension. The suspension may be obtained by mixing at high intensity. In this process, pH adjustment may be carried out. The pH adjustment may be carried out using sodium hydroxide.

The oil phase may comprise any oil, conventionally used in parenteral nutrition, including for example, olive oil, soybean oil, fish oil, and medium chain triglycerides, and any other suitable lipophilic ingredients. Preferably, the oil is selected from the group consisting of olive oil, soybean oil, fish oil, and medium chain triglycerides. More preferably the oil phase comprises 30% w/w soybean oil 30% w/w medium chain triglycerides, 25% w/w olive oil and 15 % w/w fish oil. The oil phase may be transferred to aqueous phase through a membrane filter. The aqueous phase components and the oil phase components may be mixed together to obtain a pre-emulsion.

The term "fish oil" refers to "purified fish oil" and to "purified fish oil rich in omega 3 fatty acids", the latter according to the European Pharmacopoeia 6.0 comprising at least 9 % (w/w) of the omega-3-fatty acid docosahexaenoic acid (DHA) and at least 13 % (w/w) of the omega-3 fatty acid eicosapentaenoic acid (EPA) expressed as triglycerides. Fish oils are commercially available. In the context of the present disclosure the term "fish oil" also refers to fish oil extracts that may be further enriched or downgraded respectively in certain fatty acids. Such fish oil extracts are commercially available, e.g., from Solutex S.L.

The term "medium chain triglycerides" (MCT) refers to triglycerides of fatty acids having 6 to 12 carbon atoms in length, including caproic acid, caprylic acid, capric acid and lauric acid. MCT are commercially available.

The emulsion may be obtained by high-pressure homogenization.

The process of homogenization may be carried out by applying pressures in the range of 350 and 400 bar at a temperature in a range of 50 to 80°C. This is preferably done at a temperature in a range of 55 to 70°C. This process may be followed by sterilization. The emulsion may be filled into a suitable container before or after sterilization. The emulsion may further be diluted under stirring with appropriate amount of water followed by filtration to obtain final emulsion.

### ABBREVIATIONS

- SFE-EYP: : supercritical fluid extracted egg-yolk powder
- PC: : phosphatidylcholine
- PE: : phosphatidylethanolamine
- LPE: : lysophosphatidylethanolamine
- LPC: : lysophosphatidylcholine
- SPH: : Sphingomyelin
- PI: : Phosphatidylinositol
- HPLC: : High performance liquid chromatography
- LC: : Liquid chromatography
- UV: : Ultraviolet
- w/w: : weight by weight
- DMC: : dimethyl carbonate
- DEC: : diethyl carbonate
- DL: : dextrorotatory and laevorotatory
- Mbar: : millibar
- CAD: : charged aerosol detector
- MTBE: : 2-Methoxy-2-methylpropan (aka Methyl-tert-butylether)
- ICP-OES: : Inductively coupled plasma optical emission spectroscopy

### EXAMPLES

Detailed experimental parameters according to the present invention are provided by the following examples, which are intended to be illustrative and not limiting any possible embodiment of the invention.

### Example 1: Comparative experiment of the effect of the selected solvent on the composition of the egg-yolk lecithin after winterization

Different solvent combinations were tested and the composition achieved were analysed.

The impact of using these different solvent combinations for the extraction of egg-yolk lecithin in step d) followed by winterization in step f) of the process on the purity of the final egg-yolk lecithin (i.e. purified egg-yolk lecithin after all steps of the process described above have been performed), was analysed via High-Performance Liquid Chromatography with Charged Aerosol Detection.

### Example 1.1: Preparation of purified egg-yolk lecithin with ethanol:acetonitrile (57:43)

The SFE-EYP (200g) was extracted using 1190 mL of ethanol and acetonitrile (57:43) solvent mixture at 20-25°C. The stock solution of ethanol: acetonitrile (57:43) mixture was prepared by mixing 1140 mL of ethanol and 860 ml of acetonitrile. DL-α-Tocopherol solution (10 mL, prepared by dissolving 50mg of DL-α-Tocopherol in 10 ml of solvent mixture prepared above) was added and reaction mixture stir for 30 to 40 minutes at 55-60°C. The hot slurry was filtered, and the resulting solid was washed with 400 ml of solvent mixture prepared above. The filtrate was treated with charcoal (8.0g) at 40-45°C followed by stirring for 55-65 minutes.

The charcoal treated reaction mass was cooled to -12 to -8°C under stirring for 90 minutes, resulting in the precipitation of impurities. The mixture thus obtained was filtered through a jacketed funnel, while maintaining the jacket temperature, -12 to -8°C, followed by addition of DL-α-Tocopherol solution (10 mL, prepared by dissolving 50mg of DL-α-Tocopherol in 10 ml of solvent mixture prepared above) to the filtered solution. The obtained solution was filtered again through a 5µ filter and then concentrated under vacuum below 35°C to obtain purified egg-yolk lecithin (54g, 0.27 w/w).

### Example 1.2: Preparation of purified egg-yolk lecithin with ethanol:DEC (40:60) extraction

Ethanol and Diethyl carbonate (40:60) mixture (250 mL) was charged into 1L reactor and SFE-EYP (50g) was added under stirring. The mixture was stirred for 80-90 min at 40-45°C. The heterogeneous mixture while hot, was filtered to obtain a clear solution. The filtrate was cooled to -20 to -15°C under stirring for 7-8h resulting in the precipitation of impurities. The reaction mass was filtered through a jacketed funnel, while maintaining the jacket temperature in the range of -20 to -10°C. The filtrated solution was concentrated under vacuum below 35°C to obtain (10.9g, 0.22 w/w) of purified egg-yolk lecithin. Even though no additional charcoal treatment step was performed the yield was so low, the experiment clearly showed that the solvent mixture ethanol:DEC is not a suitable one.

### Example 1.3: Preparation of purified egg-yolk lecithin with ethanol:DMC (40:60) extraction

SFE-EYP (200g) and ethanol (1000 mL) were charged into 2L reactor. The mixture was stirred for 80-90 minutes at 40-45°C, followed by filtration of heterogeneous reaction mass. The clear filtrate thus obtained, was concentrated under vacuum at 40°C to get solid residue. The solid residue was further dissolved in ethanol and dimethyl carbonate (40:60) mixture under stirring to get solution. The obtained solution was cooled to -10 to -5°C under stirring for 15-16h. The resulting precipitate was filtered through a jacketed funnel, while maintaining the jacket temperature in a range of -10 to -5°C. The filtrated solution was concentrated under vacuum below 35°C to obtain (42.0g, 0.21 w/w) of purified egg-yolk lecithin. It turned out that the ethanol:DMC solvent did not deliver sufficient yield.

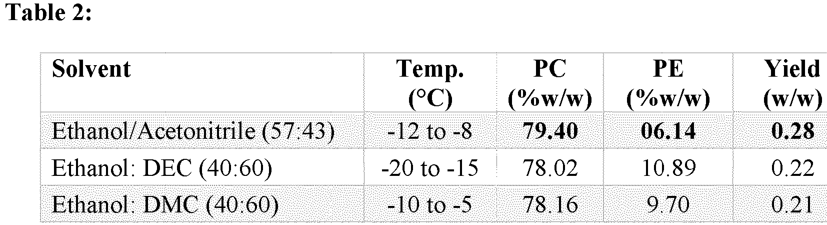

### Example 2: Comparative experiment for the preparation of purified egg-yolk lecithin with different extraction solvents

Different solvents suitable for the extraction step d) were tested and the compositions achieved were analysed.

Varying amounts of SFE-EYP (15-50g) were suspended in the respective solvents mentioned in column 1 of Table 3 at 20-25°C. The heterogeneous suspension was stirred for 60-90 minutes at 40-45°C. The hot suspension was filtered, and residual protein was washed with the respective solvent (1Volume). The filtrate and washing were combined, and the resulting solution was evaporated below 45°C.

The PC and PE content of the so treated samples were analysed via High-Performance Liquid Chromatography with Charged Aerosol Detection. Also, the yield of these extractions was determined, where possible.

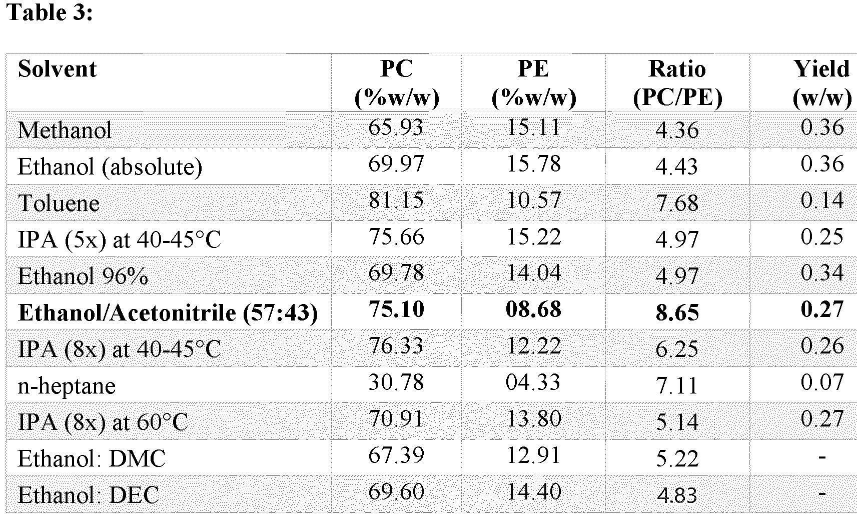

The analysis shows that already the selection of the solvent influences the PC content, and the PC/PE ratio, even before the step of cooling out of the impurities is even performed.

### Example 3: Comparative experiment for the preparation of purified egg-yolk lecithin with different extraction temperatures used in step d)

Different temperatures for extracting egg-yolk lecithin with the ethanol/acetonitrile (57:43) mixture were tested.

The impact of using these different conditions for the extraction of egg-yolk lecithin in step d) of the process on the purity of the final egg-yolk lecithin (i.e. purified egg-yolk lecithin after all steps of the process described above have been performed), was analysed via High-Performance Liquid Chromatography with Charged Aerosol Detection.

### Example 3.1:

SFE-EYP (180g) was extracted using 1080 mL of ethanol and acetonitrile (57:43) mixture at 20-25°C followed by addition of DL-α-Tocopherol (14.5mg). The ethanol: acetonitrile stock solution was prepared by mixing ethanol (820.8 mL) and acetonitrile (619.2 ml). The mixture was stirred for 30-40 minutes at a temperature of **40-45°C.** The heterogeneous mass filtered, and the residual solid protein was washed with 370 ml of stock solution prepared above. The filtrate and washings were combined, and the resulting solution was treated with charcoal (7.2g) at 40 to 45°C and stirred for 60-70 minutes.

The charcoal treated mass was cooled to -12 to -8°C under stirring for 80-90 minutes, resulting in precipitation of impurities. The reaction mixture was filtered through a jacketed funnel, while maintaining the jacket temperature in a range of -12 to -8°C followed by addition of DL-α-Tocopherol (14.5mg) to the filtered solution. The solution was filtered again through a 0.45µ filter and then concentrated under vacuum below 35°C until the remaining residue appeared viscous and the remaining viscous mass was completely dried to obtain (46.0g,0.25 w/w) of purified egg-yolk lecithin.

### Example 3.2:

SFE-EYP (120g) was extracted using 710 mL of ethanol and acetonitrile (57:43) mixture at 20-25°C followed by addition of DL-α-Tocopherol (30mg in 10ml of ethanol: acetonitrile (57:43)). The ethanol: acetonitrile stock solution was prepared by mixing ethanol (547.2 mL) and acetonitrile (412.8 ml). The mixture was stirred for 30-40 minutes at **50-60°C.** The heterogeneous mass filtered, and the residual solid protein was washed with 230 ml of stock solution prepared above. The filtrate and washings were combined, and the resulting solution was treated with charcoal (4.8g) at 40 to 45°C and stirred for 55-60 minutes.

The charcoal treated mass was cooled to -12 to -8°C under stirring for 80-90 minutes, resulting in precipitation of impurities. The reaction mixture was filtered through a jacketed funnel, while maintaining the jacket temperature in a range of -12 to -8°C followed by addition of DL-α-Tocopherol (10 mg) to the filtered solution. The solution was filtered again through a 0.45µ filter and then concentrated under vacuum below 35°C to obtain (30g, 0.25 w/w) of purified egg-yolk lecithin.

### Example 3.3

Pre-washed SFE-EYP (20g) was extracted using 120 mL of ethanol and acetonitrile (57:43) mixture at 20-25°C followed by addition of DL-α-Tocopherol (5 mg in 102.5ml of ethanol: acetonitrile (57:43)). The ethanol: acetonitrile stock solution was prepared by mixing ethanol (91.2 mL) and acetonitrile (68.8 ml).

The reaction mass was stirred for 50-60 minutes at a temperature of **60-70°C.** The heterogeneous mass was filtered, and the residual solid protein was washed with 60 ml of stock solution prepared above. The filtrate presented as very dark coloured solution, the experiment was stopped at extraction stage, and no cooling (winterization) was performed. Accordingly, no comparable yield could be determined.

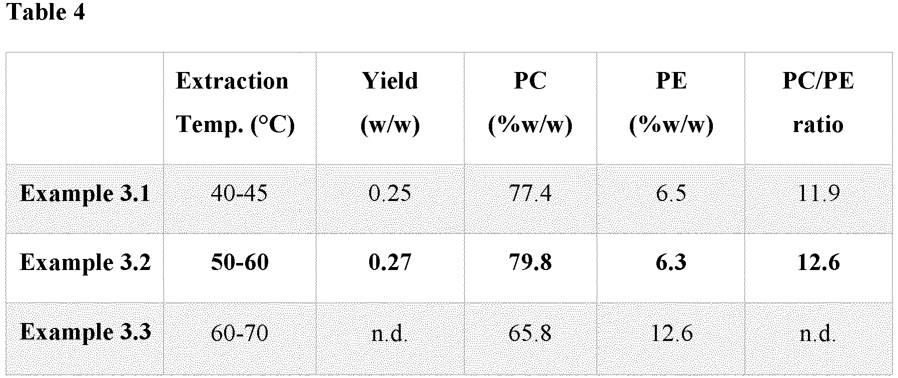

### Example 4: Preparation process of purified egg-yolk lecithin with a solvent 1 in step b) and use of solvent mixture of ethanol:acetonitrile (57:43) in extraction step d) and charcoal treatment as step e)

3540 ml dimethyl carbonate were charged into a 5L reactor. A solution of DL-α-Tocopherol (0.15g) in dimethyl carbonate (60 ml) was prepared and added. 600g of supercritical fluid extracted egg-yolk powder was added and mixed with the 3600 ml solution under stirring. The mixture was heated to 40 to 45°C and stirred for 55 to 65 minutes at this temperature. The hot mixture was filtered, using a Buchner funnel with 10µ Whatman filter paper and 10 µ filter cloth. The filtered solid was washed with 1200 ml (600 mLx2) of dimethyl carbonate. The solid was dried under vacuum 200-300 mbar (610 to 535 mmHg) at 20 to 30°C for 4 to 6 hours.

The resulting DMC washed SFE-EYP was extracted using 3540 mL of a solvent mixture of ethanol and acetonitrile mixture (4800 mL of solvent mixture was prepared by using 2736 mL of absolute ethanol and 2064 mL of acetonitrile) at a temperature in a range of 20-25°C followed by addition of DL-α-Tocopherol solution. The mixture was heated to a temperature of 55 to 60°C followed by stirring for 30 to 40 minutes. The hot slurry was filtered, and the resulting solid was washed with 1200 ml (600mLx2) of said solvent mixture. The filtrate was treated with charcoal at a temperature in a range of 40 to 45°C followed by stirring for 55-65 minutes.

The obtained solution was cooled to -12 to -8°C under stirring for 90 minutes, at 100 RPM, resulting in precipitation of further impurities. The resulting mixture was filtered through a jacketed funnel, while maintaining the jacket temperature in a range of -12 to - 8°C followed by addition of DL-α-Tocopherol (prepared by dissolving 0.048 g DL- α-Tocopherol in 30 mL of the solvent mixture prepared earlier) to the filtered solution obtained. The obtained solution was filtered again through a 5u and a 0.22u polyvinylidene fluoride filter and then concentrated under vacuum below 35°C until the remaining residue appeared viscous and the remaining viscous mass was dried to obtain 161.8 g (0.27 w/w) of purified egg-yolk lecithin.

### Example 5: HPLC-CAD assay for determination of components of purified egg-yolk lecithin

PC, PE, SPH, LPC, LPE & cholesterol content as shown in Table 1 was determined by High Performance Liquid Chromatography (HPLC) equipped with CAD. CAD was used to detect non-volatile analytes that do not possess a UV absorbance, by detecting charged aerosol particles that were created when the mobile phase and analyte were evaporated under the following conditions.

The Mobile phases used were the following:
**Mobile phase A** containing acetonitrile.

**Mobile phase B** was prepared by accurately weighing and transferring 1.3 g of ammonium formate into 1 L bottle containing 1000 mL of milli-q water and the mixture was sonicated to mix well. Formic acid was added to adjust the pH to 3.30. The solution was filtered through 0.22 filter paper.

**Mobile phase C** contained a mixture prepared by accurately transferring 500mL of methanol and 500mL of milli-q water into 1 L bottle which was sonicated to mix well and was degassed.

Chloroform: Methanol in a ratio of 2:1 was used as diluent and blank as well.

The following chromatographic conditions have been used:

**Table 5:**

| **For Left pump** | | | | |
|---|---|---|---|---|
| Column | YMC-Pack SIL (250x4.6) mm, 5 µm | | | |
| Flow Rate | 1.5 mL/min. | | | |
| | Flow rate | Time (Min.) | MP-A (%) | MP-B (%) |
| | 1.5 | 0 | 94 | 6 |
| | 1.5 | 1 | 94 | 6 |
| | 1.5 | 20 | 65 | 35 |
| | 1.5 | 20.1 | 94 | 6 |
| | 1.5 | 25 | 94 | 6 |
| | 0.2 | 25.1 | 94 | 6 |
| | 0.2 | 30 | 94 | 6 |
| | 1.5 | 30.1 | 94 | 6 |
| | 1.5 | 40 | 94 | 6 |
| Column Oven Temperature | 23° C | | | |
| Auto Sampler Temperature | 5° C | | | |
| Needle wash | Diluent | | | |
| Detector | CAD | | | |
| Injection Volume | 10 µL | | | |
| Run Time | 40 minutes | | | |
| Rinsing solution | 90:10 methanol : water | | | |

| **CAD Parameters** | | | | |
|---|---|---|---|---|
| Power function | 1.6 | | | |
| Evaporation temperature | 50°C | | | |
| Signal | 5 Hz | | | |

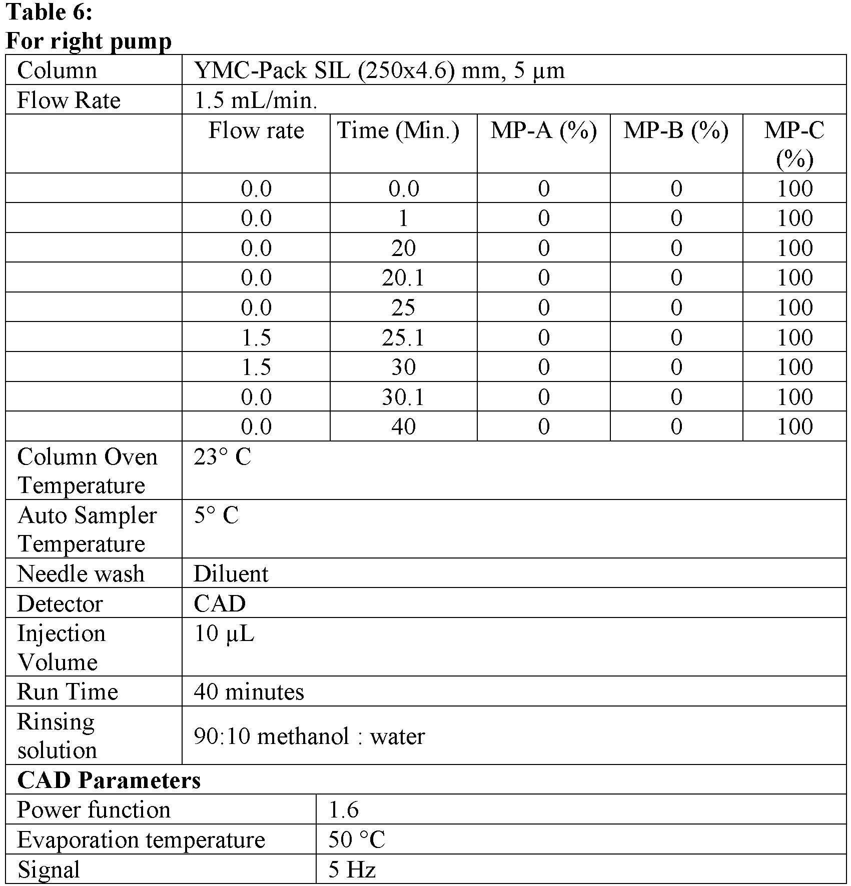

## Claims

1. A process for the preparation of a purified egg-yolk lecithin comprising the steps of:
a) providing supercritical fluid extracted egg-yolk powder as starting material,
b) treating the supercritical fluid extracted egg-yolk powder with a solvent 1,
c) separating the product obtained in step b) from the solvent 1,
d) extracting an egg-yolk lecithin fraction from the product obtained in step c) with a solvent 2,
e) optionally, treating the egg-yolk lecithin fraction obtained in step d) with charcoal,
f) precipitating impurities from the egg-yolk lecithin fraction obtained in step d) or step e), by cooling the solution obtained in step d) or step e),
g) removing the precipitated impurities from the product obtained in step f),
h) isolating a purified egg-yolk lecithin from the product obtained in step g), and
i) optionally, drying the purified egg-yolk lecithin,
wherein, in step d) the solvent 2 is a solvent mixture consisting of ethanol and acetonitrile.

2. The process according to claim 1, wherein step b), step d), step e), and/or step g) further comprises an addition of a radical scavenger.

3. The process according to claim 2, wherein the radical scavenger is DL-α-Tocopherol.

4. The process according to any of the preceding claims wherein step b) comprises adding supercritical fluid extracted egg-yolk powder to a solvent 1 and stirring the obtained mixture at an elevated temperature.

5. The process according to claim 4 wherein step b) is performed at a temperature in a range of 30-60°C, and preferably the stirring is maintained for a time interval of 50 to 70 minutes.

6. The process according to any one of the preceding claims, wherein the vol/vol ratio of ethanol to acetonitrile is 57 to 43.

7. The process according to any one of the preceding claims, wherein the extraction in step d) is performed at a temperature in the range of 50-60°C.

8. The process according to any one of the preceding claims, wherein during the extraction in step d) the solution is stirred for a time of 30 to 60 minutes.

9. The process according to any one of the preceding claims, wherein in step e) charcoal treatment is performed at a temperature in a range of 30 to 50°C and at a time interval of 30 minutes to 3 hours.

10. A purified egg-yolk lecithin obtained by a process according to any one of claims 1 to 9.

11. The purified egg-yolk lecithin according to claim 10, which has a phosphatidylcholine to phosphatidylethanolamine ratio of 7.5 to 9.0, more preferably of 8.0 to 9.0, most preferably of 8.5 to 8.7.

12. The purified egg-yolk lecithin according to claim 10 or 11, which is essentially free from aluminium ions.

13. A lipid emulsion comprising purified egg-yolk lecithin according to any one of claims 10 to 12.

14. A nutritional product suitable for parental administration comprising a lipid emulsion comprising a purified egg-yolk lecithin according to any one of claims 10 to 12.

15. A method for preparing a lipid emulsion, comprising
a) providing an oil phase comprising an oil, and optionally a pharmaceutically acceptable antioxidant, optionally a pharmaceutically acceptable co-emulsifier, preferably a free long chain fatty acid, wherein the fatty acids are present in triglyceride-bound form;
b) providing an aqueous phase comprising water for injection and optionally a pharmaceutically acceptable tonicity agent and/or an agent for pH adjustment and/or a chelating agent;
c) forming a pre-emulsion by mixing the oil phase provided in step a) with the aqueous phase provided in step b);
d) forming an oil-in-water emulsion by high-pressure homogenizing the pre-emulsion obtained in step c); and
e) sterilizing the oil-in-water emulsion obtained in step d), wherein optionally the oil-in-water emulsion is filled into a suitable container before or after sterilization, wherein the egg-yolk lecithin, according to any one of claims 10 to 12, is added in step a) or step b).

16. The method according to claim 15, wherein a pharmaceutically acceptable antioxidant is provided in step a) and said antioxidant is DL-α-Tocopherol.

17. The method according to claim 16, wherein the oil is selected from the group consisting of olive oil, soybean oil, fish oil, and medium chain triglycerides.
